Europäisches Patentamt

European Patent Office

Office européen des brevets

(11) Veröffentlichungsnummer: **0 491 327 A2**

# EUROPÄISCHE PATENTANMELDUNG

(21) Anmeldenummer: **91121546.5**

(51) Int. Cl.⁵: **G11B 20/18**

(22) Anmeldetag: **16.12.91**

(30) Priorität: **19.12.90 DE 4040722**

(43) Veröffentlichungstag der Anmeldung:
**24.06.92 Patentblatt 92/26**

(84) Benannte Vertragsstaaten:
**AT BE CH DE DK ES FR GB GR IT LI LU NL SE**

(71) Anmelder: **GIGATAPE SYSTEME FUER
DATENSICHERUNG GMBH
Benzstrasse 28
W-8039 Puchheim(DE)**

(72) Erfinder: **Brauner, Ingolf
Schützenstrasse 15
W-8912 Kaufering(DE)**

(74) Vertreter: **Heim, Hans-Karl, Dipl.-Ing. et al
c/o Weber & Heim Hofbrunnstrasse 36
W-8000 München 71(DE)**

(54) **Verfahren zur Datensicherung.**

(57) Mit dem Verfahren werden Daten gesichert, die auf einem Magnet-Datenträger abgespeichert sind. Bei der ursprünglichen Datenaufzeichnung werden Aufzeichnungsspuren bzw. Speicherkapazität freigehalten. In jedem Lesemodus erfolgt eine Überprüfung der betreffenden Daten im Hinblick auf Fehler. Wird ein Datenfehler festgestellt, so erfolgt eine Fehlerkorrektur und die korrigierten Daten werden in den reservierten Aufzeichnungsspuren abgespeichert.

Fig. 1

EP 0 491 327 A2

Die Erfindung betrifft ein Verfahren zur Sicherung von Daten, die auf einem magnetisch beschichteten Datenträger abgespeichert sind, beispielsweise auf einem Magnetband, wobei die Daten in vorgegebenen Dateneinheiten, beispielsweise Gruppen, auf vorgegebenen Spuren abgespeichert und mit einem fehlerkorrigierenden Code gesichert sind.

Bekanntlich besteht bei elektromagnetisch aufgezeichneten Daten die Gefahr, daß beim Einschreiben oder Auslesen aufgrund von mechanischen Vorgängen oder elektromagnetischen Einflüssen Datenfehler entstehen. Häufige Ursachen können z.B. Alterungsprozesse des Datenträgers und/oder der magnetisierbaren Beschichtung sein.

Aus diesem Grund werden die Daten mit einem fehlerkorrigierenden Code gesichert. Es ist auf diese Weise grundsätzlich möglich, beim Auftreten eines Fehlers die ursprüngliche Information zu rekonstruieren. Unter Einsatz derartiger Codes war es bisher üblich, nach einer vorgegebenen Einsatzzeit eines Datenträgers sicherheitshalber alle Daten auf einen zuverlässigen, in der Regel neuen Datenträger zu übertragen. Als Kriterium für den Zeitpunkt dieser Sicherung mußte hierbei der Zustand desjenigen Datenträgerbereichs in Betracht gezogen werden, der mechanisch am stärksten beansprucht wurde, d.h. auf welchen am häufigsten ein Zugriff erfolgte. Abhängig von der gesamten Speicherkapazität kann es sich hierbei um einen relativ kleinen Bereich des Datenträgers handeln. Dieser macht es erforderlich, daß auch der mengenmäßig überwiegende, unkritische Teil der Daten neu abgespeichert werden mußte, was relativ viel Zeit und zusätzliche Speicherkapazität beansprucht, da in der Regel ein neuer Datenträger erforderlich ist.

Der Erfindung liegt die **Aufgabe** zugrunde, ein Verfahren der eingangs genannten Art anzugeben, welches weniger Zeit und Speicherkapazität beansprucht und dennoch zuverlässig ist.

Diese Aufgabe wird gemäß dem kennzeichnenden Teil des Anspruchs 1 gelöst.

Ein Grundgedanke der Erfindung besteht demnach darin, Speicherkapazität bzw. Aufzeichnungsspuren zu reservieren, um während des Lesemodus fehlerhafte oder kritische Dateneinheiten zu speichern. Somit werden auch Daten zuverlässig gesichert, auf welche ausschließlich im Lesemodus zugegriffen wird, beispielsweise in Datenarchiven. Da es sich bei den fehlerhaften Daten regelmäßig um sehr geringe Mengen handelt, sind entweder die auf einem Datenträger im konkreten Fall ohnehin freien Speicherplätze ausreichend oder es können jedenfalls leicht entsprechende freie Speicherplätze reserviert werden. Zur Durchführung des erfindungsgemäßen Verfahrens reicht also die auf einem Datenträger vorhandene Speicherkapazität in der Regel über lange Zeit aus, um die aufgezeichneten Daten jeweils im Lesemodus nach einer Korrektur umzuspreichern, wenn sich durch Band-Verschleiß Fehler ergeben. Allenfalls müssen vielleicht in Ausnahmefällen nur vernachlässigbar kleine Speicherkapazitäten zusätzlich bereitgestellt werden. Die Standzeiten eines Datenträgers werden auf diese Weise entscheidend verlängert.

Bevorzugt ist es vorgesehen, daß die ursprünglich freigehaltenen Speicherbereiche bzw. Aufzeichnungsspuren zwischen zwei ursprünglich abgespeicherten Dateneinheiten angeordnet sind. Sie werden mit anderen Worten zwischen die ursprünglich belegten Aufzeichnungsspuren eingestreut. Dabei kann es zweckmäßig sein, diese reservierten Bereiche im Rahmen der Datensicherung sukzessive aufzufüllen. Alternativ dazu kann es jedoch besonders vorteilhaft sein, eine fehlerkorrigierte Dateneinheit jeweils in den nächstliegenden freien Bereich abzuspeichern.

Alternativ dazu besteht eine bevorzugte Weiterbildung darin, daß der ursprünglich freigehaltene Bereich des Datenträgers im Anschluß an die ursprünglich eingeschriebenen Daten angeordnet ist, d.h. davor oder dahinter.

Eine besonders gute Datensicherheit wird dadurch erreicht, daß die Überprüfung, Korrektur und Abspeicherung nicht nur im Schreib-/Lesemodus (read-after-write), sondern insbesondere im reinen Lesemodus erfolgt. Der Datenträger wird daher bei jeder Benutzung überprüft und erforderlichenfalls wird ein korrigierter Datenblock an einer anderen Stelle des Bandes abgespeichert.

Nachfolgend wird die Erfindung anhand eines in der Zeichnung dargestellten Beispiels weiter beschrieben:

Fig. 1     zeigt schematisch einen Magnetband-Datenträger und

Fig. 2     zeigt schematisch eine Einzelheit des Magnetband-Datenträgers aus Fig. 1.

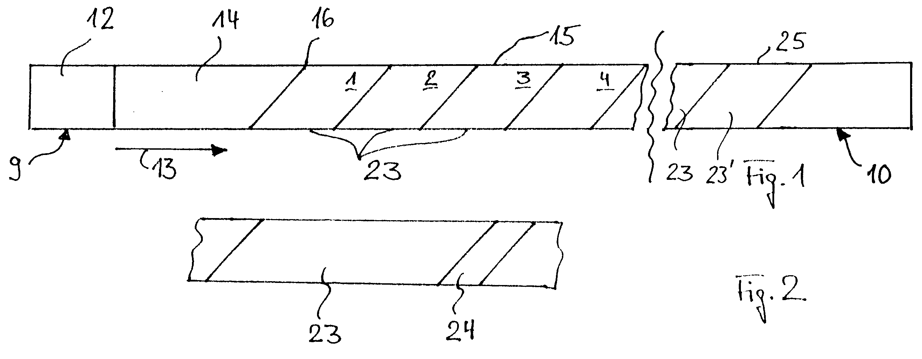

In Fig. 1 ist ein Magnetband-Datenträger mit einem anfangs- und einem endseitigen Bandabschnitt 9 bzw. 10 veranschaulicht. Wie die Fig. 1 und 2 ferner zeigen, enthält der Magnetband-Datenträger am Bandanfang einen Vorlaufabschnitt 12, der in der Regel keine Magnetschicht trägt, anschliessend in Vorwärtslaufrichtung (Pfeil 13) einen freigehaltenen, jedoch mit üblichem magnetisierbarem Material beschichteten Bandabschnitt 14, an welchen sich ein als Datenspeicher dienender Bandabschnitt 15 anschließt. Der Beginn 16 dieses Abschnitts wird als Bandanfang (BUT) im eigentlichen Sinn bezeichnet.

Die Aufzeichnung von Daten im Bandabschnitt 15 erfolgt auf Schrägspuren, die mit Hilfe einer rotierenden Magnetkopftrommel eingeschrieben bzw. ausgelesen werden (nicht dargestellt). Eine vorgegebene Anzahl von derartigen Schrägspuren bzw. die darin abgespeicherten Daten sind in Einheiten zusammengefaßt, die als Gruppen 23 bezeichnet und fortlaufend mit 1, 2, 3 als logische Gruppennummern durchnummeriert sind. Die einzelnen Gruppen 23 sind durch Abstände 24 physikalisch voneinander getrennt.

Auf dem endseitigen Bandabschnitt 10 ist im Anschluß an die ursprünglich abgespeicherten Gruppen 23 Speicherkapazität reserviert. In diesem freigehaltenen Bereich 25 können einzelne Gruppen 23' zur Datensicherung umgespeichert werden, wie nachfolgend im einzelnen beschrieben wird.

Wenn im Lesemodus auf die ursprünglich abgespeicherten Gruppen 23 zugegriffen wird, werden die jeweils ausgelesenen Daten, die auf an sich bekannte Weise mit einem fehlerkorrigierenden Code gesichert sind, auf die Häufigkeit von notwendigen Fehlerkorrekturprozessen hin selbsttätig überprüft und überwacht. Kriterium kann hierbei beispielsweise die Rohfehlerrate sein. Wird innerhalb einer Gruppe 23 eine vorgebbare Datenfehler-Schwelle überschritten, so wird die gesamte Gruppe in den nächsten verfügbaren freigehaltenen Bereich innerhalb des Bandabschnitts 25 umgespeichert, nachdem der Fehler korrigiert wurde.

Die logische Gruppennummer und der neue physikalische Speicherplatz werden über eine Tabelle miteinander verknüpft.

Zusammenfassend sind folgende wichtige Merkmale der Erfindung festzuhalten:
Ein wesentlicher Unterschied zum bekannten read-after-write-Verfahren liegt in der ständigen Überwachung des Datenträgers beim Lesen der Daten oder Verifizieren, wobei erfindungsgemäß bei jedem Lesevorgang und nicht nur im Anschluß an einen Schreibvorgang eine Datenprüfung durchgeführt wird. Das read-after-write-Verfahren wird also bei der Aufzeichnung, das erfindungsgemäße Verfahren bei der Wiedergabe von Daten benutzt. Aufgrund der Datenüberprüfung bei jedem Lesevorgang wird beim Auftreten einer erhöhten Rohfehlerrate jederzeit sofort eine Verlegung des betreffenden Datenblocks an eine Alternativstelle auf dem Datenträger vorgenommen.

Erfindungsgemäß wird der Grad der Beschädigung eines Datenträgers durch Prüfen, Messen und Bewerten der Datensignale vor der Korrektur in Form einer quantitativen Aussage gewonnen (Rohfehlerrate). Die Entscheidung zur Datenverlagerung kann daher schon frühzeitig getroffen werden.

Beim erfindungsgemäßen Verfahren erübrigt es sich, das Mehrfach-Auftreten von lokalen Fehlstellen zu detektieren und listenmäßig festzuhalten. Vielmehr wird auf die Fehlerhistorie einer Datenträgerstelle nicht Bezug genommen.

Erfindungsgemäß wird die Güte des Datenträgers aus der Rohfehlerrate der Daten errechnet. Ein zusätzlicher Testlauf mit Schreiben und Lesen spezieller Testdaten ist daher nicht erforderlich.

Im Unterschied zum Stand der Technik ist erfindungsgemäß eine Grundformatierung des Datenträgers, die vor dem ersten Beschreiben durchgeführt werden muß und auch bereits die Struktur und den Ort für die Alternativspuren und -sektoren festlegt, keine notwendige Bedingung. Die Umschreibung der Daten kann auf jede beliebige Stelle vor oder hinter den fehlerhaften Daten vorgenommen werden. Dies ermöglicht, das Verfahren auch auf sequentielle Datenspeicherung anzuwenden.

**Patentansprüche**

1. Verfahren zur Sicherung von Daten, die auf einem magnetisch beschichteten Datenträger abgespeichert sind, beispielsweise auf einem Magnetband, wobei die Daten gruppenweise organisiert und in vorgegebenen Aufzeichnungsspuren enthalten sowie mit einem fehlerkorrigierenden Code gesichert sind, dadurch **gekennzeichnet**, daß bei der ursprünglichen Datenaufzeichnung Aufzeichnungsspuren vorgegebener Länge bzw. Kapazität zunächst freigehalten werden, daß in jedem Lesemodus beim Überschreiten einer vorgegebenen Rohfehlerrate die zugehörige Dateneinheit korrigiert und auf einen neuen Speicherplatz in den freigehaltenen Aufzeichnungsspuren eingeschrieben wird, daß eine Zuordnungstabelle zwischen dem jeweiligen ursprünglichen und neuen Speicherplatz erstellt wird und daß im weiteren Betrieb des Datenträgers anschließend gegebenenfalls auf den neuen Speicherplatz anstelle des zugehörigen ursprünglichen Speicherplatzes zugegriffen wird.

2. Verfahren nach Anspruch 1, dadurch **gekennzeichnet**, daß die zunächst freigehaltenen Aufzeichnungsspuren zwischen ursprünglich abgespeicherten Dateneinheiten auf dem Datenträger angeordnet sind.

3. Verfahren nach Anspruch 1, dadurch **gekennzeichnet**, daß die freigehaltenen Aufzeichnungsspuren im Anschluß an die ursprünglich belegten Aufzeichnungsspuren angeordnet sind.

Fig. 1

Fig. 2